# EUROPÄISCHE PATENTSCHRIFT

(11) **EP 1 282 929 B1**
(45) Veröffentlichungstag und Bekanntmachung des Hinweises auf die Patenterteilung: **16.06.2004**
(21) Anmeldenummer: 01925268.3
(22) Anmeldetag: 08.05.2001
(51) Int. Cl.: H02G 3/38, A47B 21/00

(54) **VERKABELUNG EINES MODULAREN MÖBELSYSTEMS**
WIRING OF A MODULAR FURNITURE SYSTEM
CABLAGE D'UN SYSTEME DE MEUBLE MODULAIRE

(30) Priorität: 19.05.2000 EP 00810434
(43) Veröffentlichungstag der Anmeldung: 12.02.2003
(73) Patentinhaber: USM Holding AG, 3073 Gümligen (CH)
(72) Erfinder: SCHAERER, Alexander, CH-3073 Gümligen (CH); GERBER, André, CH-3604 Thun (CH); CASSANI, Antonio, CH-3110 Münsingen (CH)
(74) Vertreter: Roshardt, Werner Alfred, Dipl.-Phys.
(86) Internationale Anmeldenummer: PCT/CH2001/000281
(87) Internationale Veröffentlichungsnummer: WO 2001/089050

(56) Entgegenhaltungen:
- DE-A- 19 621 547
- GB-A- 2 101 175
- US-A- 4 924 032
- US-A- 5 595 495

## Beschreibung

### Technisches Gebiet

Die Erfindung betrifft ein Möbelsystem mit einer Elektrifizierung, wobei das Möbelsystem mehrere, zur Aufnahme von funktionellen Möbeleinheiten gebildete Konstruktionselemente aufweist. Ferner bezieht sich die Erfindung auf einen Mehrfachstecker, der die Elektrifizierung des Möbelsystems ermöglicht.

### Stand der Technik

Heutzutage ist fast jeder Arbeitsplatz - sei es im Büro-, Labor- oder Heimbereich - mit einem Computer ausgerüstet. Auch Telefone werden häufig nicht mehr allein mit dem Strom aus der Telefonleitung betrieben, sondern müssen wie jedes andere elektrische Gerät an das Stromnetz angeschlossen werden. Schliesslich wird zur Befriedigung der individuellen Lichtbedürfnisse (namentlich in Büros mit mehreren Arbeitsplätzen) oft eine zusätzliche Tisch- oder Stehlampe verwendet.

Konventionellerweise wird ein Verlängerungskabel mit einer Steckerleiste auf dem Boden ausgelegt, an welcher dann die verschiedenen Verbraucher direkt angeschlossen werden. Erfahrungsgemäss führt dies zu einem Kabelgewirr, welches weder aus sicherheitstechnischen noch aus ästhetischen Gründen zu befriedigen vermag. Um ein solches Kabelgewirr zu vermeiden, sind auch Kabelkanäle bekannt. Diese werden in bzw. auf dem Boden, der Wand oder der Decke verlegt.

Gerade bei modularen Möbelsystemen gab es verschiedenste Lösungsansätze. Einerseits ist aus der DE-OS 196 21 547 A1 (USM) ein modulares Inneneinrichtungssystem mit mehreren, verschiedenen funktionellen Einheiten wie Korpusse, Arbeitsflächen, Trennwandplatten, Beleuchtungskörper usw. bekannt, wobei jedes Konstruktionselement des Inneneinrichtungssystems als ein eigenständiger, vertikaler, geschlossener rechteckiger Rahmen ausgebildet ist. Damit Kabel im Rahmen untergebracht werden können, werden in diesem Kanäle bzw. Nuten angeordnet. Andererseits wurden zur Elektrifizierung von modularen Möbelsystemen Stromschienen verwendet. Ein solcher Ansatz ist beispielsweise in der WO 98/38705 offenbart.

Eine weitere Möglichkeit für eine Elektrifizierung eines Innen-Raumteilersystems und ein Umschaltsystem ist in der US 5,595,495 A (Johnson et al.) gezeigt. Das Umschaltsystem steuert an Stellwänden befestigte Steckdoseneinheiten. Jede Stellwand ist mit einem vorverkabelten elektrischen System versehen und hat an der unteren Seite einen Kabelkanal, in welchem die Elektrifizierung untergebracht wird. Die benachbart aufgestellten Stellwände werden elektrisch über Mehrfachstecker mit einem flexiblen elektrischen Verbinder zusammengeschlossen. Ein Gehäuse kann in Schlitzen des Rahmens der Stellwände eingreifen und rastermässig in der Vertikalen verschoben werden.

Die GB 2 101 175 A (Project Office Furniture Ltd.) zeigt ein Elektrifizierungssystem für Wandschirme mit Kabelkanälen, in denen die elektrische Versorgung untergebracht ist. Die durchgehenden Kabelkanäle können entlang der Längsholme der Wandschirme rastermässig in der Vertikalen verschoben werden. Im Kabelkanal sind Leitungen und 'an den Enden Anschlüsse sowie Steckdosen angeordnet. Über Anschlüsse werden die Kabelkanäle untereinander mit einem kurzen Kabel oder einem Spiralkabel verbunden. Der Kabelkanal kann auch offen ausgebildet sein, damit beispielsweise eine Steckdoseneinheit seitlich im Kabelkanal verschiebbar ist.

Der grösste Teil der bekannten Elektrifizierungssysteme istfür die Installation in Gebäuden bestimmt. Zu erwähnen sind beispielsweise Stromschienen für die Beleuchtung und diejenigen zum Setzen von Steckdosen an frei wählbaren Stellen. Diese Anordnungen erfüllen die gängigen Sicherheitsstandards, sind aber ziemlich gross und kompliziert aufgebaut. Daneben sind Stromschienen-Systeme für Spezialanwendungen bekannt, welche aber hinsichtlich der Sicherheit meist nicht zu befriedigen vermögen.

Aus dem Vitrinenbau sind Elektrifizierungen ganzer Möbelsysteme bekannt. Dabei werden die durch die einzelnen Teile des Konstruktionselements gebildeten Ebenen mit Glasscheiben oder Metallblechen abgedeckt. Die Elektrifizierung erfolgt beispielsweise mit fest in den Längsholmen eingebauten Kabeln und definierten Abgriffen für Beleuchtungskörper. Die Längsholme können auch integrierte Stromschienen aufweisen. Bei diesen Ausführungsformen wird meistens mit Niedervolt, insbesondere im Bereich von 12 bis 24 V gearbeitet, damit die Profilgrösse der Längsholme innerhalb gewisser Grenzen bleibt, so dass eine ästhetische Ausgestaltung des Möbels noch möglich ist. Bei all diesen bekannten Systemen ist eine modulare Erweiterung, vor allem auch der Elektrifizierung, nur beschränkt gegeben.

Werden Möbelsysteme erweitert, verkleinert oder umgestellt, muss die Verkabelung jedesmal aufwendig der neuen Situation angepasst werden. Wenn die Verkabelung eines Möbelsystems bauseits - z. B. im Boden, den Wänden oder der Decke - verlegt wurde, werden zusätzliche aufwendige Anpassungen nötig.

Alle bekannten Systeme befriedigen die Anforderungen nicht, welche an ein heutiges und zukünftiges modulares Möbelsystem gestellt werden.

### Darstellung der Erfindung

Aufgabe der Erfindung ist es, eine Elektrifizierung eines Möbelsystems zu schaffen, welche ein Kabelgewirr verhindert und auf benutzerspezifische Wünsche, insbesondere bei modularen Möbelsystemen soweit Rücksicht nimmt, dass die Elektrifizierung vom Benutzer selbst mit minimalem Aufwand angepasst werden kann.

Die Lösung der Aufgabe ist durch die Merkmale des Anspruchs 1 definiert. Gemäss der Erfindung weist die Elektrifizierung des Möbelsystems einen an einem Teil des,Konstruktionselements befestigbaren Mehrfachstecker auf. Dieser Mehrfachstecker wird durch ein Kabel vorgegebener Länge gespiesen, welches von einem Konstruktionselement getragen wird und als elektrische Verbindung zwischen Mehrfachsteckem von zwei benachbarten Konstruktionselementen des Möbelsystems dient.

Durch dieses System zur Elektrifizierung wird ein Kabelgewirr verhindert und trotzdem werden die Vorteile eines modularen Möbelsystems beibehalten. Die Modularität des Möbelsystems verlangt, dass trotz der Verkabelung die Konstruktionselemente umgestellt, die Anzahl der Konstruktionselemente erweitert oder reduziert werden können. Dieses vor allem schnell, einfach und bei Gewährleistung einer geordneten Kabelführung. Das von einem Konstruktionselement des Möbelsystems getragene Kabel kann beispielsweise in einem sogenannten Kabelkanal oder einer Ausnehmung des Konstruktionselements untergebracht sein. Auch eine sonstige Befestigung an dem Konstruktionselement ist denkbar. Die Anschlüsse der Kabel werden in den Mehrfachstecker eingesteckt und bilden so eine flexible und benutzerfreundliche elektrische Verbindung. Durch die Befestigung des Mehrfachsteckers an einem Teil des Konstruktionselements kann - im Rahmen der zur Verfügung stehenden Kabellänge - dieser flexibel auf einer Höhe angebracht werden. Damit wird ein bequemes Einstecken von Geräteanschlüssen gewährleistet. Weiter können die benachbarten Konstruktionselemente des Möbelsystems beliebig aneinander gereiht werden.

Um die einfache Bedienung beispielsweise einer Beleuchtung zu .gewährleisten, welche an einem oberen Teil des Konstruktionselements befestigt ist, kann an einem Teil des Konstruktionselements des Möbelsystems auch ein Schalter bzw. ein Taster befestigt werden. Bisher war der Schalter bzw. der Taster oft direkt an einem Beleuchtungskörper angeordnet. Der obere Teil des Konstruktionselements ist meistens in einer Höhe von 1.80 bis 2.20 m angeordnet, was die Bedienung des Beleuchtungskörpers teilweise erschwert und vor allem für kleingewachsene Personen den Bedienungskomfort eines solchen modularen Möbelsystems wesentlich beeinträchtigt. Dieser Schalter bzw. Taster kann auch als Hauptschalter einer ganzen Gruppe von elektrischen Geräten (z. B. Computer, Drucker, Tischleuchten etc.) dienen. Neben der Verwendung von Schaltern bzw. Tastern können auch Sensoren verwendet werden.

Ein Vorteil ist die verschiebbare Befestigung des Mehrfachsteckers und/oder des Schalters bzw. Tasters. Gerade beim Schalter bzw. Taster kann somit die Höhe auf die individuelle Körpergrösse des Benutzers eingestellt werden. Vor allem durch die verschiebbaren Befestigungsmöglichkeiten der Mehrfachstecker kann auch eine modulare Aufstellung der Konstruktionselemente gewährleistet werden, wenn diese beispielsweise unterschiedlich beabstandet angeordnet sind.

Bevorzugt ist eine schlittenartige Ausbildung des Befestigungsmittels. Diese ermöglicht ein beliebiges Verschieben beispielsweise des Mehrfachsteckers. Durch Reibung wird der Mehrfachstecker an seiner Position gehalten. Wenn eine zusätzliche Sicherung gewünscht wird, kann der Mehrfachstecker auch fix befestigt werden. Eine solche fixe Befestigung kann eine Verschraubung darstellen.

Um dem Benutzer Anhaltspunkte für eine geeignete Positionierung der Mehrfachstecker, Schalter, Taster und Sensoren zu geben, kann eine Rasterung vorgegeben werden. Es handelt sich dabei um eine grössere Anzahl vorgegebener Positionen, an denen und nur an denen diese Zubehörteile befestigt werden können.

Das modulare Möbelsystem umfasst zumindest zwei Längsholme. Aus konstruktiven Gründen werden die einzelnen Bestandteile der Elektrifizierung (z. B. Mehrfachstecker, Taster bzw. Schalter) bevorzugt an diesen Längsholmen befestigt. Je nach Grundform des einzelnen Konstruktionselementes (Dreieck, Quadrat bzw. Rechteck, Trapez, Polygon etc.) kann sich die Anzahl der Längsholme ändern.

Vorzugsweise besteht das Möbelsystem aus mehreren geschlossenen Konstruktionselementen. Ein solches Konstruktionselement wird beispielsweise durch einen rechteckigen Rahmen gebildet, welcher aus mindestens zwei seitlichen Längsholmen und mindestens zwei oben und unten horizontal angeordneten Bügeln besteht. Solche Konstruktionselemente sind beispielsweise in der WO 98/38705 beschrieben. Vorzugsweise ist an einem dieser Bügel direkt oder indirekt mindestens eines der Kabel gehalten. Ein indirektes Halten kann dadurch realisiert sein, dass ein Kabelträger (welcher z: B. schalenförmig ausgebildet ist) an einem solchen Bügel angeordnet ist. Dabei wird der Kabelträger vorzugsweise derart ausgebildet, dass er an dem entsprechenden Bügel über einen Schnappmechanismus angeklinkt werden kann. Bevorzugt wird eine kanalförmige Schale aus Kunststoff hergestellt. Wenn die Ränder des Profils zumindest einseitig einen Freiraum zwischen dem Bügel und dem Schalenrand frei lassen, können nachträglich anfallende Kabel problemlos in diesem Profil untergebracht werden.

Des Weiteren sind Ständerkonstruktionen bekannt, weiche zu Bürolandschaften ergänzt werden können. In der US 5,522,324 (van Gelder et al.) und in der US 5,715,760 (Frascaroli et al.) werden solche modulare Systeme beschrieben. Es liegt im Sinn der Erfindung, dass auch an solchen Möbelsystemen die erfindungsgemässe Elektrifizierung ausgeführt werden kann.

Eine weitere Variante zu der gerade beschriebenen Ausführung ist ein Konstruktionselement, welches durch einen geschlossenen Quader gebildet wird. Dieser besteht beispielsweise aus vier seitlichen Längsholmen, die untereinander mit oben, unten und in die Tiefe angeordneten Bügeln versehen sind. Solche geschlossene Quader sind besonders aus dem Vitrinenbau bekannt.

Die Längsholme sind vorzugsweise derart ausgebildet, dass der Mehrfachstecker sowie der Schalter auf einer beliebigen Höhe befestigt werden kann. Die Anordnung der Mehrfachstecker wird durch die Länge der verwendeten Kabel mit einer vorgegebenen Länge bestimmt, weiche die elektrische Verbindung bilden. Die Befestigung wird vorzugsweise mit einem Einklink-Mechanismus in einem Längsschlitz gewährleistet. Die Befestigungsmittel am Rahmen können neben der bevorzugten Ausgestaltung in Form von Längsschlitzen auch Querschlitze, vorstehende Noppen oder ganze Leisten sein. Die Mehrfachstecker werden an den vorstehenden Befestigungsmitteln sinngemäss der Befestigung in den Längsschlitzen befestigt.

Der Einklink-Mechanismus wird vorzugsweise so ausgebildet, dass nach der Befestigung des Mehrfachsteckers an dem Befestigungsmittel des Rahmens, dieser weiterhin verschiebbar ist. Eine Variante dazu ist die Vorgabe bestimmter Positionen bei dem Befestigungsmittel (z. B. eine Rasterung), an denen der Mehrfachstecker befestigt wird. Ein Verschieben des Mehrfachsteckers ist nur auf den bestimmten Positionen möglich.

Es liegt auf der Hand, dass auch andere bekannte Systeme eingesetzt werden können, welche ein Einklinken eines Gehäuses in einer Ausnehmung ermöglichen. Die Längsschlitze können auf allen vier Seiten der Längsholme vorgesehen sein. Vorzugsweise werden jedoch zwei gegenüberliegende Längsschlitze angeordnet, welche sich an den Seiten des Längsholmes befinden, welche nach Montage von Arbeits- oder Nutzflächen des Möbelsystems bzw. des Aneinanderreihens der Konstruktionselemente frei bleiben. Bevorzugt sind die Längsschlitze an den Seiten angebracht, die parallel zu der durch den rechtecki-. gen Rahmen gebildeten Ebene ausgerichtet sind. Diese Längsschlitze können auch der Unterbringung von Kabeln dienen, welche von dem Mehrfachstecker zu den Verbrauchern führen. Eventuell anfallende Überlängen der Kabel können in den Längsschlitzen der Längsholme untergebracht werden. Werden anstatt Längsschlitze Noppen als Befestigungsmittel am Rahmen angeordnet, können auch Kabelkanäle eingeklinkt werden, in denen Überlängen von Kabeln untergebracht werden können.

Vorzugsweise werden die Konstruktionselemente von einer Seite, auf eine Frontalansicht bezogen von der rechten oder linken Seite, her elektrifiziert. Beispielsweise wird der Mehrfachstecker an dem Längsholm befestigt, der weiter von dem Netzanschluss entfernt ist, als der andere Längsholm desselben Konstruktionselementes. Findet eine. Elektrifizierung von der linken Seite her statt, bezogen auf eine Frontalansicht, wird der Mehrfachstecker an dem rechten Längsholm befestigt. Bei dem benachbarten und jedem weiteren Konstruktionselement wird der Mehrfachstecker dementsprechend auch an dem rechten Längsholm angebracht. Bei einer Elektrifizierung von der rechten Seite her, bezogen auf eine Frontalansicht, ist die Anordnung entsprechend spiegelbildlich. Dies resultiert in einer Befestigung des Mehrfachsteckers an dem linken Längsholm. Ziel ist es, mit möglichst wenigen Kabeln genormter Länge eine umfassende (d. h. eine im Einzelfall alle Bedürfnisse des Benutzers befriedigende) Elektrifizierung zu erstellen. Es wird eine Einheitlichkeit innerhalb der gesamten Inneneinrichtung angestrebt. Es liegt im Sinne der Erfindung, dass die Funktionalität des Möbelsystems und die Bedürfnisse der Benutzer in Bezug auf die Anordnung der Mehrfachstecker im Vordergrund stehen.

Je nach örtlichen Gegebenheiten und den individuellen Wünschen der Benutzer ist es auch denkbar, die Konstruktionselemente sternförmig anzuordnen. Dabei wäre eine Elektrifizierung von der Decke oder aus dem Boden im Zentrum der sternförmigen Anordnung bevorzugt, aber nicht eine Bedingung. Des Weiteren könnten auch zwei Konstruktionselemente spiegelbildlich angeordnete Mehrfachstecker aufweisen. Dies in dem Sinne, dass bei dem einen Konstruktionselement der Mehrfachstecker am linken Längsholm, auf eine Frontalansicht bezogen, und am benachbarten Konstruktionselement der nächste Mehrfachstecker am rechten Längsholm, auch hier auf eine Frontalansicht bezogen, befestigt sein kann.

Je nach Anordnung ist es auch denkbar, dass einer der Längsholme das Kabel tragende Element des Konstruktionselementes bildet. In diesem Fall wären die oberen und unteren horizontalen Bügel mit entsprechenden Befestigungsmitteln versehen, in denen die Mehrfachstecker und/oder Schalter bzw. Taster eingeklinkt würden. Aus ästhetischen Gründen und zur Verhinderung des Heraustretens der in den Schlitzen untergebrachten Kabel, werden vorzugsweise einklinkbare Abdeckungen auf diesem Längsschlitz angebracht. Der Mechanismus, welcher ein Einklinken der Abdeckung ermöglicht, kann entsprechend dem Einklink-Mechanismus der Mehrfachstecker ausgebildet sein. Diese Abdeckungen werden vor Ort der vorhandenen Anordnung angepasst, da diese durch Mehrfachstecker, Schalter und Ableitungen zu elektrischen Geräten unterbrochen werden.

Damit kein Kabelgewirr entsteht, ist vorzugsweise die Kabellänge zu begrenzen. Aus ästhetischen und konstruktiven Gründen ist als tragendes Element des gesamten Konstruktionselementes der obere bzw. untere horizontale Bügel bevorzugt. Die Länge des Kabels, welches die elektrische Verbindung zwischen den Konstruktionselementen des Möbelsystems herstellt, beträgt dadurch vorzugsweise die Länge des horizontal verbindenden Bügels plus einer Überlänge, welche etwa einen Fünftel der Länge des Längsholms beträgt. Die Überlänge kann auch der Länge eines Längsholms entsprechen. Je nach Anwendung und individueller Benützerwünsche können auch Zwischengrössen oder benutzerspezifische Längen der Kabel verwendet werden.

Bei symmetrischer bzw. gleichartiger Anordnung der Mehrfachstecker an den Längsholmen ergibt sich durch die Kabel mit der vorgegebenen Länge somit eine Platzierung der Mehrfachstecker im unteren Bereich des Längsholms, welche bei etwa einer Höhe zwischen einem Zehntel bis der Hälfte der gesamten Höhe des entsprechenden Längsholms liegt.

Heutige Büroeinrichtungen müssen eine Flexibilität und Individualität bieten und haben sich immer mehr zu eigentlichen Bürolandschaften (beispielsweise integrale Inneneinrichtungssysteme) entwickelt. Aus diesem Grund werden gewisse Elemente, wie beispielsweise die Beleuchtung solcher Bürolandschaften, zentral gesteuert. Diese Verkabelung ist von der eigentlichen Elektrifizierung getrennt. Um jedoch auch hier ein Kabelgewirr zu verhindern, werden diese Steuerelemente mit der Elektrifizierung des Möbelsystems kombiniert. Die zusätzlichen Halterungen für die Steuerungselemente werden beispielsweise an den Längsholmen oder direkt an den Mehrfachsteckern lösbar befestigt. Die Befestigung ist vorzugsweise in der Form eines Einklink-Mechanismus ausgebildet. Der Aufbau dieser Halterungen ist mit denen der Mehrfachstecker der elektrischen Versorgung vergleichbar. Da die Steuerelemente vorzugsweise im Bereich der Niederspannung betrieben werden, sind die Abmessungen dieser Halterungen gegenüber denen der Mehrfachstecker reduziert. Bevorzugt wird, dass die zusätzlichen Halterungen in verschiedenen Stellungen an den Mehrfachsteckem befestigbar sind. Die Befestigungsmittel an den Mehrfachsteckem können auch so ausgebildet sein, dass an diesen weitere Mehrfachstecker befestigt werden können.

Vorzugsweise basiert die Verkabelung der Steuerung auf einem Standard wie beispielsweise EIB, DALI oder LON. Für die Steuerung wird vorzugsweise ein allgemein bekannter Standard verwendet, welcher es ermöglicht, über ein dezentrales System alle Teilnehmer bidirektional miteinander kommunizieren zu lassen. Zusätzlich können durch die Verwendung von solchen Systemen Energie und Leitungswege gespart werden.

Der Taster bzw. Schalter kann bei der Verwendung eines solchen Standards durch einen Sensor ersetzt werden. Wie der Taster bzw. der Schalter ist der Sensor bevorzugt an einem der Längsholme verschiebbar befestigt, was aber die Variante der Integration an oder in einer Steckerleiste nicht ausschliesst. Der Sensor leitet bei Betätigung durch einen Benutzer den gewünschten Eingriff in die zentrale Steuerung der Beleuchtung an die Zentrale weiter. Damit trotz den manuellen Eingriffsmöglichkeiten ein generelles Beleuchtungskonzept beibehalten werden kann, ist es denkbar, in der PC-gestützten Steuerung Toleranzbereiche anzugeben, welche nicht überschritten werden dürfen. Durch eine solche Beschränkung ist es möglich, Störungen an anderen Arbeitsplätzen durch einen manuellen Eingriff an einem der Arbeitsplätze auf ein Minimum zu reduzieren.

Eine bevorzugte Ausgestaltung eines Mehrfachsteckers für ein modulares Möbelsystem besteht aus einem Gehäuse und einem auswechselbaren,. eingeklinkten Mehrfachkupplungseinsatz. Eine Auswechselbarkeit des Mehrfachkupplungseinsatzes ermöglicht eine flexible Verwendung des Mehrfachsteckers. Je nach Ausrichtung kann der Mehrfachstecker den örtlichen Gegebenheiten angepasst werden. Daneben hat die Auswechselbarkeit auch auf eine langfristige Nutzung vorteilhafte Auswirkungen, dies insbesondere auf das Gehäuse. Sollte der Mehrfachkupplungseinsatz eines Tages defekt sein oder kommt in Zukunft ein anderes Steckersystem zum Einsatz, kann die bestehende Verkabelung einfach weiterbenutzt werden, denn nur der Mehrfachkupplungseinsatz muss ausgewechselt werden.

Damit eine verschiebbare Befestigung des Mehrfachsteckers möglich ist, weist das Gehäuse zumindest auf einer Aussenseite einen Einklink-Mechanismus auf. Dieser Einklink-Mechanismus wird, beispielsweise durch zwei nach innen verschiebbare "Zungen" aus Kunststoff, mit Druck auf die dem Einklink-Mechanismus gegenüberliegende Aussenseite des Mehrfachsteckers im Längsschlitz eingeklinkt bzw. eingerastet. Durch Zusammendrücken der "Zungen" aus Kunststoff kann der Mehrfachstecker zerstörungsfrei entfernt und an einem anderen Ort angebracht werden. Theoretisch wäre es denkbar, an mehr als einer Aussenseite des Gehäuses einen Einklink-Mechanismus zur Befestigung des Mehrfachsteckers an einem der Längsholme vorzusehen. In der bevorzugten Ausbildung des Mehrfachsteckers werden jedoch die drei restlichen Aussenseiten mit Befestigungsmitteln für die Halterungen der Steuerelemente versehen.

Die Befestigung des Mehrfachkupplungseinsatzes innerhalb des Gehäuses ist derart gestaltet, dass einerseits die auftretenden Zugkräfte, welche insbesondere beim Entfernen der Kabel entstehen, aufgenommen werden können und andererseits ein späterer Ausbau des Mehrfachkupplungseinsatzes möglich ist. Der Mehrfachkupplungseinsatz ist dementsprechend ausgebildet. Vorzugsweise werden aufeinander abgestimmte Einklink-Mechanismen verwendet, welche bereits auf dem Markt bekannt sind.

Die Aussenseiten des Gehäuses des Mehrfachsteckers die keinen Einklink-Mechanismus zur Befestigung des Mehrfachsteckers beispielsweise an einem Längsholm aufweisen, haben in einer bevorzugten Ausführungsform Ausnehmungen, welche als Befestigungsmittel für die Halterungen der Steuerelemente dienen. Da bevorzugt nur eine Aussenseite des Gehäuses mit einem Einklink-Mechanismus versehen ist, ergeben sich drei verschiedene Befestigungsmöglichkeiten für die Halterungen der Steuerelemente. In einer Abwandlung der beschriebenen Ausführung, kann auch eine oder mehrere Aussenseiten des Gehäuses des Mehrfachsteckers derart ausgebildet sein, dass daran ein weiterer Mehrfachstecker, in der Art der Mehrfachstecker für die Elektrifizierung, befestigt werden kann.

Ein in das Gehäuse einklinkbarer Mehrfachkupplungseinsatz weist vorzugsweise zumindest eine Einspeisung und zumindest zwei Abgriffe auf. Hierbei ist zumindest einer dieser Abgriffe für die weitere elektrische Verbindung des benachbarten Konstruktionselements reserviert. In einer bevorzugten Ausführungsform, welche eine optimale Kompaktheit des Mehrfachsteckers gewährleistet, sind zwei Abgriffe in eine Richtung und ein Abgriff sowie die Einspeisung entgegengesetzt zu diesen beiden Abgriffen angeordnet. Vorzugsweise handelt es sich bei dem Abgriff, der gleich wie die Einspeisung ausgerichtet ist, um den Abgriff, welcher der weiteren elektrischen Versorgung des benachbarten Konstruktionselements dient. Die beiden übrigen Abgriffe sind vorzugsweise in der Richtung der elektrischen Verbrauchergeräte bzw. der Beleuchtung angeordnet.

Damit eine weltweite Verwendung des modularen Möbelsystems mit der Elektrifizierung möglich ist und die Grösse des Mehrfachsteckers so klein wie möglich gehalten wird, handelt es sich bei den Anschlüssen vorzugsweise um spezielle Steckersysteme. Ein für die Elektrifizierung des modularen Möbelsystems bevorzugtes Steckersystem muss einerseits die verschiedenen nationalen Anforderungen erfüllen und andererseits in verschiedenen Ländern gleichzeitig zugelassen sein. Es sind verschiedene solche Steckersysteme bereits auf dem Markt erhältlich (z. B. "gesis", Wieland Electric GmbH, Bamberg Deutschland). Die Abmessungen des Mehrfachsteckers sind von den Abmessungen der Stecker des ausgewählten Stecker-Systems abhängig. Je kompakter der Stecker ausgebildet ist, desto kompakter wird auch der Mehrfachstecker. Ein Beispiel eines kompakten Steckers weist eine rechteckige Form auf, bei dem die Breite in etwa ein Drittel der Länge des Steckers beträgt. Bei einem solchen Stecker werden vorzugsweise drei Kontaktelemente hintereinander angeordnet, wobei es sich bei dem mittleren Kontaktelement bevorzugt um die Erdung handelt. Durch die relativ flache Ausbildung eines solchen Steckers können zwei Stecker nahe zueinander beabstandet angeordnet werden. Daraus resultiert die bevorzugte, annähernd quadratische Grundform des Gehäuses des Mehrfachsteckers der elektrischen Versorgung. Das Gehäuse weist somit eine zylindrische (Prisma) rohrartige Form auf, wobei auf bodenseitige und deckelseitige Abschlüsse verzichtet wird, damit die Stecker ein- und ausgesteckt werden können. Die Ecken des Gehäuses sind bevorzugt stark abgefast. Dies sorgt für eine ästhetische Ausgestaltung des Gehäuses und kann gleichzeitig einer Kodierung der Stecker dienen.

Die Höhe des Mehrfachsteckers ergibt sich einerseits aus der Ausbildung der Kupplung und andererseits aus einem Führungsteil, welcher eine Kodierung unterstützt sowie sicherheitstechnische und ästhetische Anforderungen an die Unterbringung eines solchen Steckers erfüllt. Da der Mehrfachstecker für die Steuerelemente an dem Mehrfachstecker der elektrischen Versorgung eingeklinkt wird, weist dieser vorzugsweise die gleiche Länge und Höhe wie dieser Mehrfachstecker auf. Die Breite ergibt sich aus der Verwendung der entsprechenden Stecker der.Steuerelemente. Auch hier sind bereits verschiedene Steuerelement-Bestandteile auf dem Markt erhältlich. Bei Anwendung eines Steuerungssystems werden Stecker verwendet, welche einer geringeren Prüfspannung widerstehen müssen; als dies bei Steckern für eine Elektrifizierung der Fall ist. Dadurch können die Halterungen der Steuerelemente kleiner als die entsprechenden Mehrfachstecker ausgebildet werden. Dies hat vor allem auf die Breite der Halterung des EIB-Systems massgeblichen Einfluss. Eine solche Halterung, die auch als Mehrfachstecker der Steuerelemente benannt werden kann, weist dadurch nur noch eine Breite auf, die etwas mehr beträgt als die halbe Länge eines Mehrfachsteckers.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Beispiel zweier benachbarter Konstruktionselemente in der Frontalansicht;
- Fig. 2: Beispiel eines Konstruktionselements in der Seitenansicht;
- Fig. 3: schematischer Schnitt A-A durch einen Längsholm;
- Fig. 4: ein Elektrifizierungskonzept (230V) für ein Möbelsystem mit einem digitalen EVG und externen Leuchtenschaltern;
- Fig. 5: ein Elektrifizierungskonzept (230V) für ein Möbelsystem mit einem digitalen EVG und EIB-Bus;
- Fig. 6a: eine Draufsicht auf einen Mehrfachstecker für die Stromversorgung mit eingeklinktem EIB-Mehrfachstecker;
- Fig. 6b: einen Schnitt durch einen Mehrfachstecker für die Stromversorgung;
- Fig. 6c: eine Ansicht eines Mehrfachsteckers für die Stromversorgung mit eingeklinktem EIB-Mehrfachstecker, und
- Fig. 7: einen Schnitt durch eine Kabelschale zur Aufnahme von Kabeln.

Grundsätzlich sind in den Figuren gleiche Teile mit gleichen Bezugszeichen versehen.

### Wege zur Ausführung der Erfindung

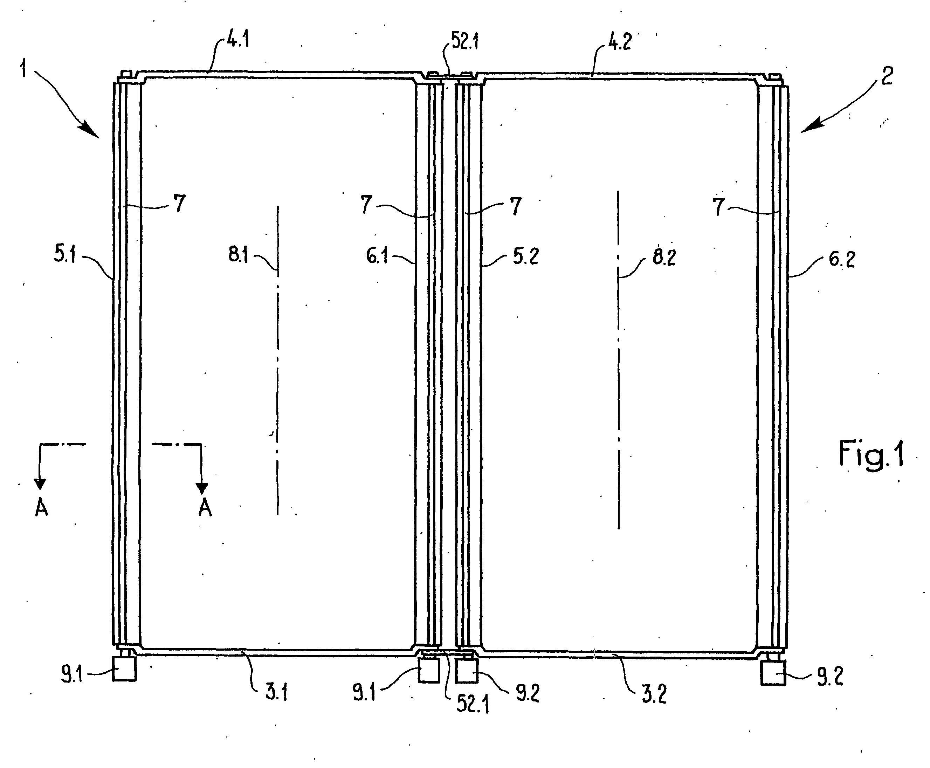

Figur 1 zeigt ein Beispiel zweier benachbarter Konstruktionselemente in einer Frontalansicht. Die nachfolgend benutzten Bezeichnungen "rechts" und "links" beziehen sich jeweils auf die dargestellte Frontalansicht. Das Konstruktionselement des modularen Möbelsystems wird durch einen geschlossenen, vertikalen, rechteckigen Rahmen 1 bzw. 2 gebildet. Dieser Rahmen 1 bzw. 2 weist zumindest einen unteren horizontalen, verbindenden Bügel 3.1 bzw. 3.2, einen oberen horizontalen Bügel 4.1 bzw. 4.2, einen links angeordneten vertikalen Längsholm 5.1 bzw. 5.2 und einen rechts angeordneten vertikalen Längsholm 6.1 bzw. 6.2 auf. Die Längsholme 5 und 6 sind mit zumindest einem in Längsrichtung verlaufenden Schlitz 7 versehen. Vorzugsweise ist der Schlitz 7 aus Stabilitätsgründen nicht in der Mitte der Längsholme 5 bzw. 6, sondern nach Aussen gerichtet, bezogen auf jeden einzelnen Rahmen, angeordnet. Die Anordnung des Schlitzes 7 ist bei den Längsholmen 5 bzw. 6 bezogen auf die mittlere Achse 8.1 bzw. 8.2 des Rahmens 1 bzw. 2 spiegelbildlich. Der Rahmen 1 bzw. 2 steht vorzugsweise auf vier Füssen 9.1 bzw. 9.2. Diese Füsse 9.1 bzw. 9.2 können beispielsweise auch blockierbare Rollen sein, damit ein schnelles Umstellen oder Auswechseln der Möbel bzw. der Rahmen 1 bzw. 2 möglich ist.

Zur Stabilisierung der einzelnen Konstruktionselemente 1 bzw. 2 und der Schaffung eines annähernd gleichmässigen Abstandes zwischen diesen, können Verbindungen 52.1 bzw. 52.2 angeordnet werden.

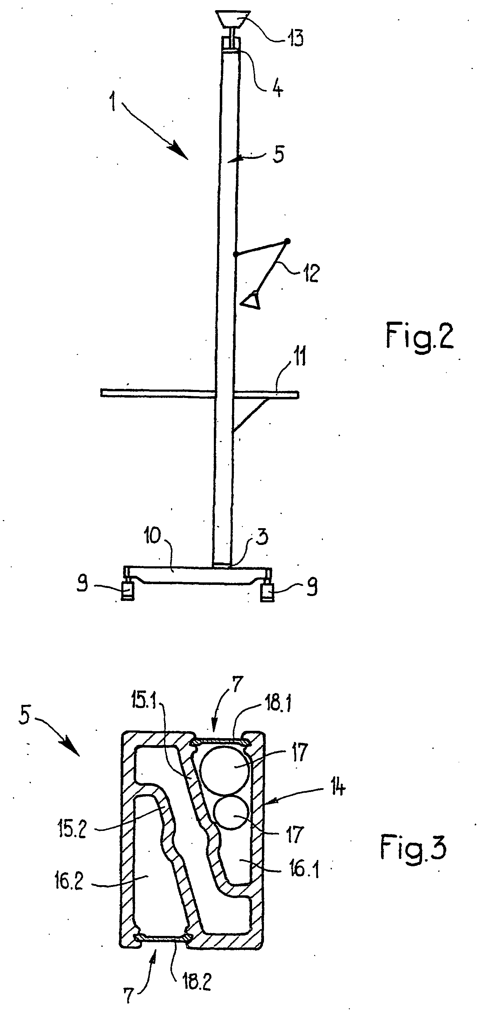

In der Figur 2 ist ein Konstruktionselement (beispielsweise Rahmen 1) schematisch in der Seitenansicht dargestellt. Damit die Stabilität des gesamten Rahmens 1 gewährleistet ist, sind die Füsse 9 an einem Querträger 10 zu der durch den geschlossenen, vertikalen, rechteckigen Rahmen 1 gebildeten Ebene beabstandet befestigt. Dieser Querträger 10 ist lotrecht zu dem unteren horizontalen Bügel 3 angeordnet. Die Figur 2 ist gegenüber Figur 1 mit zusätzlichen beispielhaften Zubehörteilen des modularen Möbelsystems versehen. So ist ein Arbeitstisch 11 auf der vom Benutzer gewünschten Höhe angebracht. Auf diesem Arbeitstisch 11 können elektrische Geräte platziert werden. Vorzugsweise ist in diesem Fall auf der dem Benutzer abgewandten Seite ein Kabelkanal unter der Platte des Arbeitstisches 11 angebracht. In diesem Kabelkanal wird bevorzugt eine Steckerleiste 20 untergebracht. Zusätzlich sind hier beispielhaft Beleuchtungselemente angeordnet. Es handelt sich dabei um eine Tischleuchte 12 für eine direkte Beleuchtung und einen Beleuchtungskörper 13 für eine indirekte Beleuchtung des modularen Möbelsystems. Bei diesem Ausführungsbeispiel wurde die bevorzugte Anordnung der Schlitze 7 dargestellt. Auf die Anordnung eines dem Schlitz 7 entsprechenden Schlitzes in der sichtbaren Seite des Längsholms 5.1 wurde verzichtet. Dadurch ist eine engere Anordnung der Rahmen 1 und 2 zueinander möglich, weil an den Seiten, bezogen auf die Frontalansicht, keine Elemente der Elektrifizierung systemgemäss angebracht werden können. Es liegt jedoch innerhalb des Erfindungsgedankens, allseitig an den Längsholmen 5.1 bzw. 6.1 Schlitze 7 vorzusehen. Ein Möbelsystem dieser Art ist z. B. aus der DE 196 21 547 A1 bekannt.

Figur 3 zeigt den schematischen Schnitt A-A durch den Längsholm 5.1. Das Hohlprofil 14 des Längsholms 5.1, vorzugsweise ein Aluminium-Profil, ist aus Stabilitätsgründen mit Versteifungen 15.1 bzw. 15.2 versehen. Bevorzugt wird links von diesem Hohlprofil 14 ein weiterer Rahmen angeordnet. Rechts von diesem Hohlprofil 14 befindet sich der nutzbare Raum des geschlossenen Rahmens 1, in dem beispielsweise Korpusse oder Arbeitstische 11 befestigt werden können. Die Schlitze 7 werden in dieser beispielhaften Ausführungsform einerseits durch die Umfassung des Hohlprofils 14 und den darin angeordneten Versteifungen 15.1 bzw. 15.2 begrenzt. Dadurch entstehen zwei nutzbare Hohlräume 16.1 bzw. 16.2, in welchen die verschiedenen Kabel 17 untergebracht werden können. Damit diese Kabel 17 nicht herausquellen und die Verkabelung auch ästhetischen Ansprüchen genügt, werden die Schlitze 7 mit einklinkbaren Abdeckungen 18.1 bzw. 18.2 versehen. Diese Abdeckungen 18.1 bzw. 18.2 können zerstörungsfrei entfernt und wieder angebracht werden. Vorzugsweise handelt es sich bei diesen Abdeckungen 18 um an den Seiten verdickte Kunststoffprofile, welche soweit elastisch verformbar sind, dass sie durch Fingerdruck einsetzbar sind und leicht wieder entfernt werden können. Diese Abdeckungen 18 werden durch eingeklinkte Mehrfachstecker 21 bzw. 31, Taster 25, Ableitungen zu elektrischen Geräten usw. unterbrochen. Deshalb sind die Abdeckungen vorzugsweise derart ausgebildet, dass diese mit einfachen Mitteln, wie beispielsweise einer Schere, von jedem Benutzer den individuellen Gegebenheiten angepasst werden können.

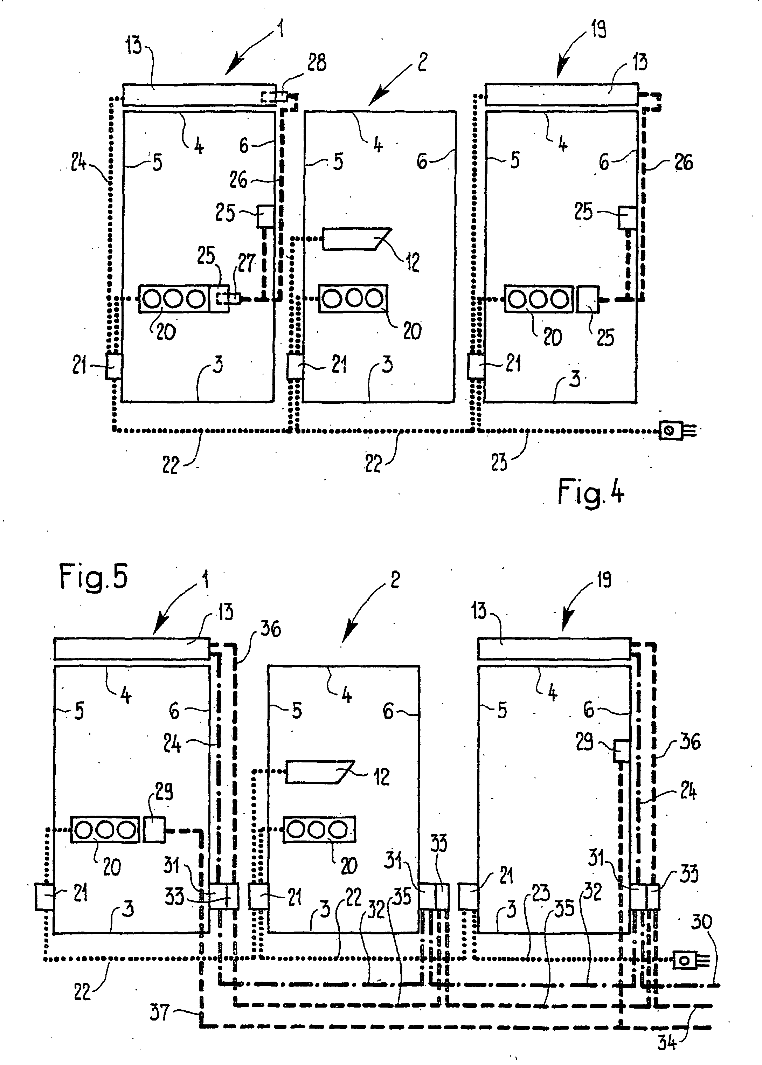

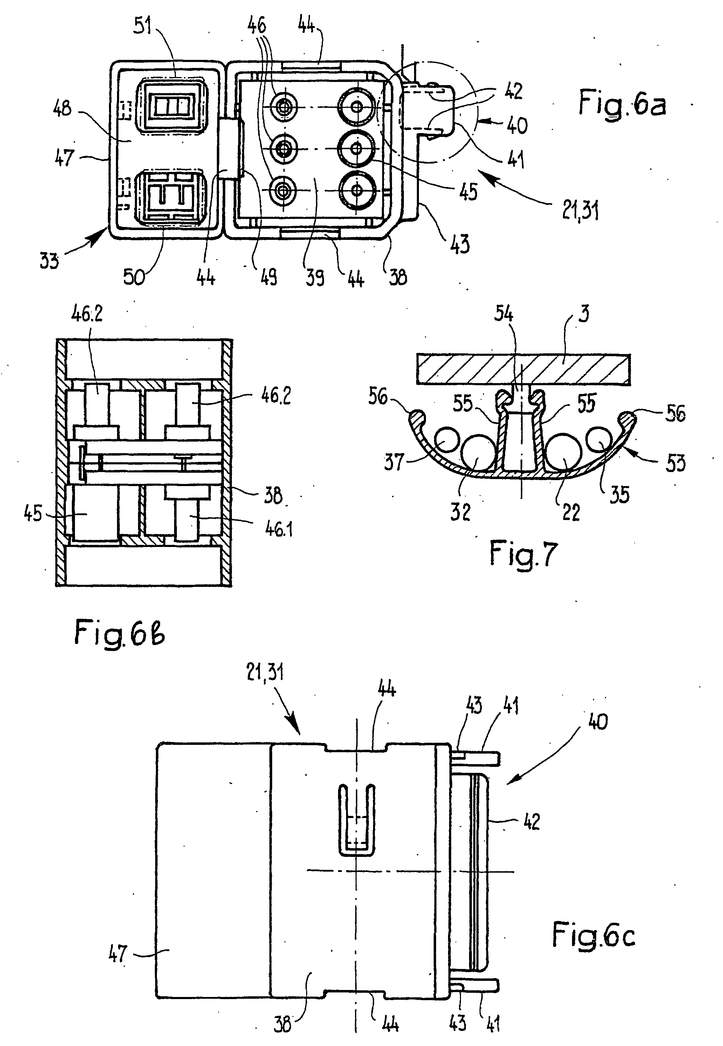

Die Figur 4 stellt schematisch ein Elektrifizierungskonzept für ein modulares Möbelsystem mit einem digitalen EVG (Elektronisches Vorschaltgerät) und externen Leuchtenschaltern dar. Dieses Konzept wird bei Stromversorgungen von 230V angewendet und die Beleuchtung ist benutzerspezifisch oder zentral gesteuert dimmbar. Zum besseren Verständnis des Konzeptes ist rechts neben dem Rahmen 2 ein weiterer Rahmen 19 angeordnet, so dass . drei Konstruktionselemente nebeneinander stehen. Diese Anordnung ist beispielhaft und es gehört zum Konzept des modularen Möbelsystems, dass dieses benutzerspezifisch ergänzt oder abgewandelt werden kann. Weiter sind verschiedene Zubehörteile, wie beispielsweise die Tischleuchte 12 im Rahmen 2, die Beleuchtungskörper 13 an den Rahmen 1 und 19 sowie Steckerleisten 20 an den Rahmen 1, 2 und 19 für elektrische Endgeräte, dargestellt. Vorzugsweise wird die Steckerleiste 20 in einem Kabelkanal untergebracht, welcher beispielsweise unter einer Tischplatte eines Arbeitstisches 11 befestigt ist. Damit die Figur 4 sowie auch die Figur 5 nicht überladen wirken, wurde beispielsweise auf die Darstellung eines Arbeitstisches 11 verzichtet. Jeweils an dem linken Längsholm 5 ist in dieser Anordnung ein Mehrfachstecker 21 verschiebbar befestigt. Die Befestigung jeweils an dem linken Längsholm 5 ist beispielhaft. Es ist ohne weiteres möglich, die Elektrifizierung von der linken Seite her zu beginnen, was in einer Befestigung des Mehrfachsteckers 21 an dem rechten Längsholm 6 resultieren würde. Die Bezeichnungen "links" und "rechts" beziehen sich auch hier auf die Frontalansicht. Die Befestigung des Mehrfachsteckers 21 erfolgt über ein Einklinken in den Schlitz 7 des Längsholms 5 bzw. 6. Die genaue Funktionsweise des Einklink-Mechanismus wird in der Detailbeschreibung der Figur 6 dargelegt. Die Höhe, auf weicher der Mehrfachstecker 21 eingeklinkt wird, bestimmt sich durch die Länge des Verbindungskabels 22 und liegt in etwa im unteren Zehntel der gesamten Höhe des Rahmens 1, 2 bzw. 19. Da vorzugsweise die Kabel gleich lang ausgebildet sind, ist die , Befestigungshöhe für alle Mehrfachstecker 21 annähernd gleich. Die Versorgung der Elektrifizierung erfolgt über das Netzanschlusskabel 23. Um eine Überlastung des Stromnetzes durch zu viele elektrische Geräte zu verhindern und eine grösstmögliche Sicherheit zu gewährleisten, kann zusätzlich zum 'Überlastungsschutz der bauseitig vorhandenen Steckdosen auch das Netzanschlusskabel 23 mit einem Überlastungsschutz versehen werden. Vorzugsweise wird ein spezielles Stecker-System für die Elektrifizierung verwendet. Damit ist eine kompakte Gestaltung, insbesondere des Mehrfachsteckers 21 möglich. Des Weiteren können in mehreren Ländern die gleichen Typen von Mehrfachsteckern 21 verwendet werden. Auf dem Markt sind verschiedene in mehreren Ländern zugelassene Steckersysteme erhältlich, welche die Anforderungen erfüllen, die ein solches modulares Möbelsystem stellt. Beispielhaft sei hier das Steckersystem "gesis". der Firma Wieland Electric GmbH, Bamberg Deutschland erwähnt.

Der Mehrfachstecker 21 weist vorzugsweise eine Einspeisung 45 und drei Abgriffe 46 auf. Dieser Mehrfachstecker 21 wird bei der Beschreibung der Figur 6 im Detail erläutert. Das dargestellte Netzanschlusskabel 23 weist an dem einen Ende einen landesüblichen, männlichen Stecker auf. An dem anderen Ende befindet sich ein weiblicher System-Stecker, der mit der Einspeisung 45 eines ersten Mehrfachsteckers 21 verbunden ist. Von dem ersten Mehrfachstecker 21 führt ein Verbindungskabel 22 von einem der Abgriffe 46.1 zu der Einspeisung eines zweiten Mehrfachsteckers 21, welcher an dem Längsholm 5 des benachbarten Rahmens 2 eingeklinkt ist. Dieses Verbindungskabel 22 weist an einem Ende einen weiblichen (Ausspeisung) und an dem anderen Ende einen männlichen System-Stecker (Abgriff) auf. Alle elektrischen Geräte werden entweder mit System-Steckern versehen oder über eine Steckerleiste 20 versorgt, welche landesübliche Abgriffe aufweist und ihrerseits über einen männlichen Systemstecker mit dem Mehrfachstecker 21 verbunden ist.

Bei dem Rahmen 1 bzw. 19 ist an dem oberen horizontalen Bügel 4 ein Beleuchtungskörper 13, beispielsweise für eine indirekte Beleuchtung, angeordnet. Der Beleuchtungskörper wird über das Verbindungskabel 24 mit Strom versorgt. Das Verbindungskabel 24 ist vorzugsweise an einem Ende fest mit dem Beleuchtungskörper 13 verbunden und weist an dem anderen, freien Ende einen männlichen System-Stecker auf, welcher mit einem der zwei noch nicht benutzten Abgriffe 46.2 des Mehrfachsteckers 21 verbunden ist.

Zur Steuerung der Beleuchtungskörper 13 werden an jedem Rahmen, welcher solche Beleuchtungskörper 13 aufweist, Taster 25 angeordnet, welche über ein separates Steuerungskabel 26 mit dem Beleuchtungskörper 13 verbunden sind. Neben der eigentlichen Ein- und Ausschalt-Funktion ist es auch möglich, über den Taster 25 die Lichtstärke der Beleuchtungskörper 13 nach den Wünschen der jeweiligen Benutzer zu dimmen. Dieser Taster 25 kann in oder an der Steckerleiste 20 integriert sein. Eine weitere Anordnungsmöglichkeit des Tasters 25 ist die Befestigung an einem der Längsholme 5 bzw. 6 nach dem Prinzip des Mehrfachsteckers 21. Der Vorteil einer Anordnung des Tasters 25 an einem der vertikalen Längsholme 5 bzw. 6 liegt in der variabel einstellbaren Höhe, welche jeder Benutzer nach seinen Bedürfnissen selbst festlegen kann.

Vorzugsweise wird das Steuerungskabel 26 an dem vertikalen Längsholm 5 bzw. 6 befestigt, welcher nach Anordnung des Verbindungskabels 22 frei geblieben ist. In diesem Beispiel ist das Steuerungskabel 26 an dem vertikalen Längsholm 6 befestigt. Das Steuerungskabel 26 kann an dem einen Ende fest mit dem Beleuchtungskörper 13 und/oder auch mit dem Taster 25 fest verbunden sein. Andererseits ist auch eine Anordnung mit einem Stecker-System denkbar. Wenn das Steuerungskabel 26 an dem einen Ende über eine Steckverbindung 27 mit dem Taster 25 und/oder an dem anderen Ende über eine Steckverbindung 28 mit dem Beleuchtungskörper 13 verbunden ist, erhöht dies massgeblich die Flexibilität des modularen Möbelsystems. Sollte zu einem Zeitpunkt kein Bedarf mehr an einer dimmbaren Beleuchtung bestehen oder wird die Beleuchtung zu einem späteren Zeitpunkt zentral gesteuert, kann bei dieser Variante das Steuerungskabel 26 problemlos von jedem Benutzer selbst entfernt werden. Wenn später wieder ein Interesse an einer dimmbaren Beleuchtung besteht oder zu einer zentralen Steuerung der Beleuchtung eine gewisse individuelle Einstellmöglichkeit bestehen soll, kann das Steuerungskabel 26 bequem von jedem Benutzer selbst angeschlossen werden.

Neben der Steuerung der Beleuchtung über einen Taster 25 kann auch der Beleuchtungskörper 13 selbst einen Ein- und Ausschalter, gegebenenfalls sogar einen Taster im Stil des Tasters 25 aufweisen. In der bevorzugten Ausgestaltung des Rahmens 1, 2 bzw. 19, weist dieser eine Höhe von ca. 1.80 bis 2.20 m auf. Da der Beleuchtungskörper 13 vorzugsweise an dem oberen Bügel 4 angeordnet wird, ist die Bedienungsfreundlichkeit jedoch stark eingeschränkt, da nur gross gewachsene Personen problemlos eine direkt an dem Beleuchtungskörper angeordnete Steuerung bedienen können.

An dem Rahmen 2 ist beispielhaft neben einer Steckerleiste 20 zusätzlich eine Tischleuchte 12 angeordnet. Diese Tischleuchte ist vorzugsweise auf das Möbelsystem abgestimmt und weist ein Kabel auf, welches an dem einen Ende fest mit der Tischleuchte 12 verbunden ist und an dem anderen Ende einen männlichen System-Stecker aufweist. Dieser Stecker wird mit einem der zwei noch nicht benutzten Abgriffe 46.2 des Mehrfachsteckers 21 verbunden.

Bei einer Elektrifizierung des modularen Möbelsystems mit 120V kann auf ein digitales EVG verzichtet werden. Wenn eine dimmbare Beleuchtung nicht gewünscht ist, kann der Taster 25 durch einen eigentlichen Ein-/Aus-Schalter ersetzt werden. Dieser Schalter kann nach dem gleichen Prinzip wie der Taster 25 angeordnet und dementsprechend befestigt werden.

Auch in Figur 5 wird ein Elektrifizierungskonzept für ein Möbelsystem mit einem digitalen EVG dargestellt. Die Beleuchtung ist auch bei diesem Konzept dimmbar, wird jedoch über eine Steuerung wie EIB, DALI oder LON gesteuert. In dem Ausführungsbeispiel wird von der Anwendung einer EIB-Steuerung ausgegangen. Die in Figur 4 dargestellten Taster 25 bzw. Schalter werden bei Verwendung eines solchen Standards durch Sensoren 29 ersetzt. Die Sensoren 29 werden nicht mit einer Spannung von 230V versorgt, sondern basieren auf einer Niedervolt-Spannung. Dadurch wird die Anforderung an die Brandlast verringert und eine kleinere Abmessung des Sensors 29 sowie der dazugehörenden sonstigen Steuerungselemente wird ermöglicht.

Anhand der Figur 5 ist eine beispielhafte Anordnung der verschiedenen Leitungssysteme ersichtlich, welche bei einer beispielhaften mit einem EIB-System gesteuerten Elektrifizierung des Möbelsystems anfallen. Sämtliche Leitungen können einerseits an oder in den einzelnen Elementen des Konstruktionselementes an- bzw. untergebracht werden. Grundsätzlich kann zwischen Versorgungs- und Steuerungsanordnungen unterschieden werden. Einerseits ist ein Versorgungsnetz für die allgemeinen elektrischen Geräte (z. B. PC, Drucker etc.) vorhanden, welches entsprechend der Verkabelungs-Anordnung aufgebaut ist, wie sie bereits unter der Figur 4 beschrieben wurde. Andererseits ist ein zweites, getrenntes Versorgungsnetz vorhanden, welches die Beleuchtungskörper 13 mit Strom versorgt. Das Versorgungsnetz für die Beleuchtungskörper 13 umfasst konzeptionell die gleichen Komponenten wie das Versorgungsnetz für die elektrischen Geräte. Es umfasst wie dieses ein Netzanschlusskabel 30, welches entsprechend dem Netzanschlusskabel 23 ausgebildet ist, und einen Mehrfachstecker 31, der vorzugsweise dem Mehrfachstecker 21 der Stromversorgung der elektrischen Geräte entspricht. Vorteilhaft ist der Mehrfachstecker 31 für die Versorgung der Beleuchtungskörper 13 an dem gegenüberliegenden vertikalen Längsholms 6 des Rahmens 1, 2 bzw. 19 angeordnet. In diesem Ausführungsbeispiel sind die Mehrfachstecker 31 jeweils an dem rechten vertikalen Längsholm 6 und die Mehrfachstecker 21 an dem linken vertikalen Längsholm 5 befestigt. Auch hier beziehen sich die Bezeichnungen "rechts" und "links" auf die dargestellte Frontalansicht. Die Rahmen 1, 2 bzw. 19 sind untereinander mit den Verbindungskabeln 32 verbunden, welche entsprechend den Verbindungskabeln 22 ausgebildet sind. Von dem Mehrfachstecker 31 führt ein Verbindungskabel 24 zu dem Beleuchtungskörper 13.

An den Mehrfachsteckern 31. sind EIB-Mehrfachstecker 33 befestigbar. Da die Mehrfachstecker 31 bevorzugt an den drei Seiten, welche nach Befestigung des Mehrfachsteckers 31 an einem der Längsholme 5 bzw. 6 frei bleiben, Befestigungsmittel aufweisen, können die EIB-Mehrfachstecker 33 an diesen drei Seiten der Mehrfachstecker 31 eingeklinkt werden. Auch eine Befestigung der EIB-Mehrfachstecker 33 an den Mehrfachsteckern 21 ist denkbar, da die Mehrfachstecker 21 und 31 vorzugsweise gleich ausgebildet sind. Von einem dezentralen System führt eine EIB-Anschlussleitung 34 zu dem EIB-Mehrfachstecker 33 und jeweils mit einer weiteren EIB-Verbindungsleitung 35 von dem einen EIB-Mehrfachstecker 33 zu dem nächsten EIB-Mehrfachstecker 33. Bei jedem Rahmen, in diesem Beispiel dem Rahmen 1 bzw. 19, an dem ein Beleuchtungskörper 13 angebracht ist, führt von dem EIB-Mehrfachstecker 33 eine EIB-Verbindungsleitung 36 zu dem entsprechenden Beleuchtungskörper 13. Mit diesem Steuerungssystem ist es möglich, beispielsweise durch eine PC-gestützte Programmierung die Beleuchtung eines Teils oder einer ganzen Bürofläche einer integralen Bürolandschaft über ein dezentrales System zu steuern.

Um den benutzerspezifischen Wünschen Rechnung tragen zu können, werden Sensoren 29 an oder in der Steckerleiste 20 angeordnet, welche es dem Benutzer ermöglichen, individuell auf die dezentrale Beleuchtungssteuerung Einfluss zu nehmen. Die Sensoren 29 können auch an einem der vertikalen Längsholme 5 bzw. 6 befestigt werden, wie dies beispielhaft bei dem Rahmen 19 dargestellt ist. Von den Sensoren 29 führen separate EIB-Verbindungsleitungen 37 zu dem dezentralen System, Welches den entsprechenden Beleuchtungskörper gemäss den benutzerspezifischen Wünschen steuert. Um Beeinträchtigungen auf benachbarte und/oder auch andere Arbeitsplätze zu beschränken, können innerhalb der PC-gestützten Steuerung Toleranzen festgelegt werden, welche auch bei einer manuellen Einflussnahme seitens eines Benutzers das Grundkonzept der Beleuchtungssteuerung der gesamten Bürolandschaft nicht stören.

In Figur 6a ist eine Draufsicht auf einen Mehrfachstecker 21 bzw. 31 für die Stromversorgung dargestellt. Der Mehrfachstecker 21 bzw. 31 besteht aus einem Gehäuse 38 und einem Mehrfachkupplungseinsatz 39. Dieser ist derart in dem Gehäuse 38 eingeklinkt, dass einerseits die beim Entfernen von Verbindungskabeln auftretenden Zugbelastungen aufgenommen werden und andererseits das Entfernen dieses Mehrfachkupplungseinsatzes 39 grundsätzlich möglich ist. Dadurch kann der Mehrfachkupplungseinsatz 39 den örtlichen Gegebenheiten entsprechend in das Gehäuse 38 eingesetzt werden. Da der Schlitz 7' nicht in der Mitte der Längsholme 5 bzw. 6 angeordnet ist, muss bei einer Ausrichtung der Einspeisung 45 des Mehrfachkupplungseinsatzes 39 nach oben bzw. nach unten, dieser durch den Benutzer auswechselbar sein. Des Weiteren muss bei einem defekten Mehrfachkupplungseinsatz 39 nicht der ganze Mehrfachstecker ersetzt werden. Weiter kann das Gehäuse auch im Einsatz bleiben, wenn in der Zukunft auf ein anderes Stecker-System gewechselt wird.

Vorzugsweise ist das Gehäuse 38 aus Spritzgusskunststoff hergestellt und die Kanten sind jeweils abgefast. Die eigentlichen Dimensionen dieses Gehäuses 38 sind durch die verwendeten Systemstecker, ihrer Grösse und dem daraus resultierenden Platzbedarf bestimmt. Der Mehrfachkupplungseinsatz 39 des Mehrfachsteckers 21 bzw. 31 weist in einer bevorzugten Ausgestaltung eine Einspeisung 45 und drei Abgriffe 46 auf. Durch die Verwendung eines normierten Stecker-Systems wird der Mehrfachstecker 21 bzw. 31 in den Dimensionen kompakt gehalten. Ein auf dem Markt erhältliches Stecker-System, welches die Anforderungen an eine Elektrifizierung eines modularen Möbelsystems weitgehend erfüllt und kompakte Stecker umfasst, ist das System "gesis", welches von der Firma Wieland Electric GmbH aus Deutschland angeboten wird. Ein Stecker dieser Art weist eine rechteckige Form auf, bei dem die Breite in etwa ein Drittel der Länge des Steckers beträgt. Bei dem Stecker werden vorzugsweise drei Anschlüsse hintereinander angeordnet, wobei es sich bei dem mittleren Anschluss um die Erdung handelt. Durch die relativ flache Ausbildung des Steckers können zwei von diesen nahe zueinander beabstandet angeordnet werden. Aus ästhetischen Gründen beträgt die Breite des Mehrfachsteckers 21 bzw. 31 die Breite des Längsholms 5 bzw. 6. Diese Breite wiederum ist aus den nötigen Stabilitätsanforderungen abgeleitet. In dieser Ausführung ist die Breite und, da ein quadratischer Querschnitt bevorzugt ist, die Länge des Mehrfachsteckers 21 bzw. 31 gleich gross. Der verwendete Stecker weist eine Länge auf, die etwa drei Viertel der gesamten Länge bzw. Breite des Mehrfachsteckers 21 bzw. 31 entspricht. Der bevorzugte quadratische Querschnitt beruht auf der Möglichkeit, den EIB-Stecker auf den drei freien Seiten des Mehrfachsteckers 21 bzw. 31 befestigen zu können. Dies auch in Berücksichtigung ästhetischer Ansprüche.

Es zeigt sich jedoch, dass die Grösse des Längsholms 5 bzw. 6 und die Grösse des Mehrfachstecker 21 bzw. 31 in einem gewissen Zusammenhang stehen. Werden Stecker mit grösseren als die vorgeschlagenen Abmessungen verwendet, kann der Mehrfachstecker 21 bzw. 31 grösser als die durch die Stabilität bedingten Abmessungen des Längsholms 5 bzw. 6 werden. Deshalb müsste zur Gewährleistung der ästhetischen und funktionellen Anforderungen, die Abmessungen des Hohlprofils 14 denen des Mehrfachsteckers 21 bzw. 31 angepasst werden. Umgekehrt müssen bei Verwendung beispielsweise eines kleineren als des vorgeschlagenen Steckers die Abmessungen des Mehrfachsteckers 21 bzw. 31 denen des Hohlprofils 14 angepasst werden. Ein Ausführungsbeispiel dieser Problematik stellt beispielsweise der EIB-Mehrfachstecker 33 dar, dessen Länge nur etwa die Hälfte der Breite beträgt, da die verwendeten Stecker der Steuerungselemente wesentlich kleiner als die Stecker der elektrischen Versorgung sind.

Die Höhe des Mehrfachsteckers 21 bzw. 31 ergibt sich aus der Ausgestaltung des Mehrfachkupplungseinsatzes 39 und je einem auf beiden Seiten, vorzugsweise nach oben und nach unten, angeordneten Führungsteils, welcher beispielsweise eine Kodierung durch die Ausgestaltung der Abfasungen des Gehäuses 38 ermöglicht. Des Weiteren haben sicherheitstechnische und ästhetische Anforderungen an die Unterbringung eines solchen Steckers auf die Höhe des Führungsteils, aber nicht nur auf diese, Einfluss. In der dargestellten Ausführung beträgt die Höhe etwa das Eineinhalbfache der Breite bzw. Länge des Mehrfachsteckers 21 bzw. 31.

Das Gehäuse 38 weist einen Einklink-Mechanismus 40 auf, welcher es ermöglicht, den Mehrfachstecker 21 bzw. 31 in dem Schlitz 7 eines der vertikalen Längsholme 5 bzw. 6 einzurasten und bei Bedarf auch wieder zerstörungsfrei zu entfernen. Zerstörungsfrei in diesem Sinn, dass der Mehrfachstecker 21 bzw. 31 beliebig verschoben bzw. an einem anderen als dem bisherigen Längsholm 5 bzw. 6 montiert und demontiert werden kann.

Dieser Einklink-Mechanismus umfasst vorzugsweise je eine oben und unten angeordnete horizontale Führungslasche 41 und zwei nach innen bewegliche, vertikal angeordnete Zungen 42. Die horizontalen Führungslaschen 41 sind an der obersten bzw. untersten Kante knapp unter bzw. über der Abfasung der Kanten angeordnet. Die Dimensionen der Länge und Breite der horizontalen Führungslaschen 41 ist durch die Grösse der Schlitze 7 in den vertikalen Längsholmen 5 bzw. 6 bestimmt. Die Dicke der horizontalen Führungslasche 41 ergibt sich aus Stabilitätsüberlegungen und beträgt in diesem Ausführungsbeispiel etwa 3 mm. Weiter sind an den eigentlichen Führungslaschen 41 zusätzliche horizontale Abstandhalter 43 auf der gleichen Höhe wie die eigentlichen Führungslaschen 41 angeordnet. Diese Abstandhalter 43 sind nur etwa halb so dick wie die eigentlichen Führungslaschen 41 ausgebildet und sind an der obersten bzw. untersten Kante der Führungslasche 41 platziert. Die Länge der Abstandhalter beträgt die Gesamtbreite des Mehrfachsteckers 21 bzw. 31 minus der jeweiligen Abfasungen und der Breite der eigentlichen Führungslasche 41.

Die vertikalen Zungen 42 weisen eine Länge von etwa vier Fünfteln der gesamten Höhe des Mehrfachsteckers 21 bzw. 31 auf. Die Eindringungstiefe dieser vertikalen Zungen 42 ist von der Wandstärke des Hohlprofils 14 der vertikalen Längsholme 5 bzw. 6 abhängig. Die vertikalen Zungen 42 weisen an den Enden, welche in den Schlitz 7 des vertikalen Längsholmes 5 bzw. 6 eindringen, Verdickungen auf, welche derart gestaltet sind, dass diese die Kante des Hohlprofils 14 umfassen. Durch gleichmässiges Drücken auf der den vertikalen Zungen 42 gegenüberliegenden Seite des Mehrfachsteckers 21 bzw. 31, werden diese, aus Sicht der Zungen 42, gegeneinander, nach innen verbogen. Sobald die Verdickungen eine Eindringungstiefe, welche grösser als die Wandstärke des Hohlprofils 14 ist, erreicht hat, rastet der Mehrfachstecker 21 bzw. 31 automatisch ein. Werden die vertikalen Zungen 42 wieder gegeneinander gedrückt, kann der Mehrfachstecker 21 bzw. 31 zerstörungsfrei demontiert werden.

An den übrigen drei Aussenseiten des Gehäuses 38 sind in diesem Ausführungsbeispiel Ausnehmungen 44 zur Befestigung eines EIB-Mehrfachsteckers 33 vorgesehen. Als Variante zu der gezeigten Ausgestaltung des Gehäuses 38 kann auch eine oder mehrere Seiten des Gehäuses 38 des Mehrfachsteckers 21 bzw. 31 derart mit Ausnehmungen ausgestaltet sein, dass ein weiterer Mehrfachstecker 21 bzw. 31 an einer solchen'befestigt werden könnte.

Anhand der Figur 6b, welche einen Schnitt durch den Mehrfachstecker 21 bzw. 31 darstellt, ist eine bevorzugte Anordnung der Einspeisung 45 bzw. der Abgriffe 46 dargestellt. Durch die symmetrische Ausgestaltung des Mehrfachsteckers 21 bzw. 31 und dem auswechselbaren. Mehrfachkupplungseinsatzes 39 kann dieser in zwei Richtungen entlang eines vertikalen Längsholms 5 bzw. 6 befestigt werden. Wird das Netzanschlusskabel 23 bzw. 31 von der Decke dem modularen Möbelsystem zugeführt, wird vorzugsweise die Einspeisung 45 in Richtung der Decke ausgerichtet. Erfolgt die Zuführung vom Boden her, wird die Einspeisung vorzugsweise in Richtung des Bodens ausgerichtet. In den Figuren 4 und 5 wird eine Zuleitung vom Boden her angenommen, weshalb in der weiteren Beschreibung von einer solchen Ausrichtung des Mehrfachsteckers 21 bzw. 31 und auch des EIB-Mehrfachsteckers 33 ausgegangen wird. Die Kompaktheit des Mehrfachsteckers 21 bzw. 31 ist von massgeblicher Bedeutung. Der neben der Einspeisung 45 angeordnete Abgriff 46.1 ist wie die Einspeisung 45 gleich ausgerichtet und grundsätzlich zur Versorgung des benachbarten Rahmens reserviert. Die beiden restlichen, der Einspeisung 45 und dem benachbarten Abgriff 46.1 entgegengesetzt angeordneten Abgriffe 46.2 dienen der Versorgung von elektrischen Geräten und der Beleuchtung.

Der EIB-Mehrfachstecker 33 besteht wie der Mehrfachstecker 21 bzw. 31 aus einem Gehäuse 47, in welchem ein Mehrfachkupplungseinsatz 48 auswechselbar eingeklinkt ist. Wie der Mehrfachkupplungseinsatz 39 des Mehrfachsteckers 21 bzw. 31 ist der Mehrfachkupplungseinsatz 48 derart in dem Gehäuse 47 eingeklinkt, dass beim Entfernen von Kabeln entstehende Zugbelastungen aufgenommen werden können. Ausserdem gelten die bei dem Mehrfachkupplungseinsatz 39 gemachten Aussagen sinngemäss, da auch ein Auswechseln des Mehrfachkupplungseirisatzes 48 erwünscht ist.

Da das Gehäuse 47 des EIB-Mehrfachsteckers 33 vorzugsweise an einer der noch zur Verfügung stehenden Aussenseiten des Mehrfachsteckers 21 bzw. 31 eingerastet wird, ist dieses auf zumindest einer Aussenseite mit je einer oben und unten angeordneten Lasche 49 versehen. Vorzugsweise weist der EIB-Mehrfachstecker 33 die gleiche Breite und Höhe wie der Mehrfachstecker 21 bzw. 31 auf. Die Länge des EIB-Mehrtachsteckers 33 ergibt sich aus der Verwendung der entsprechenden Stecker. Die Anwendung des EIB-Systems basiert auf Niederspannung im Bereich von 12 bis 24 V. Dadurch werden die Abmessungen gegenüber einer Stromversorgung auf Basis von 230V bzw. 120V erheblich kleiner, was auf die Dimensionen des EIB-Mehrfachstecker 33 massgeblich Einfluss hat. Die Länge beträgt in diesem Ausführungsbeispiel etwa. die halbe Breite des EIB-Mehrfachsteckers 33. Um eine sichere Befestigung des EIB-Mehrfachsteckers 33 an dem Mehrfachstecker 21 bzw. 31 zu erreichen, weisen die horizontalen Laschen 49 des EIB-Mehrfachsteckers 33, welche eine Länge von etwa einem Drittel der Breite des EIB-Mehrfachsteckers 33 aufweisen, Verdickungen an den der Gehäusewand abgewandten Seite auf. Durch Druck auf die den horizontalen Laschen 49 gegenüberliegende Aussenseite des EIB-Mehrfachsteckers 33 werden diese, in Bezug auf die Laschen 49, auseinander gedrückt. Sobald die Verdickungen den vorstehenden Teil der Ausnehmung 44 überwunden haben, rasten die horizontalen Laschen 49 automatisch ein. Durch Auseinanderdrücken der- horizontalen Laschen 49 kann der EIB-Mehrfachstecker 33 zerstörungsfrei von dem Mehrfachstecker 21 bzw. 31 entfernt und später an einem anderen Mehrfachstecker 21 bzw. 31 oder einer anderen Aussenseite eines Gehäuses 38 wieder montiert werden. Da auf drei der vier Seiten des Mehrfachsteckers 21 bzw. 31 Ausnehmungen für eine Befestigung vorgesehen sind, kann der EIB-Mehrfachstecker 33 je nach Umstand oder benutzerspezifischen Wünschen in verschiedenen Stellungen angeordnet werden.

Der Einklink-Mechanismus des EIB-Mehrfachstecker kann, entsprechend dem Mehrfachstecker 21 bzw. 31 ausgebildet sein. Damit wäre eine direkte Befestigung eines EIB-Mehrfachsteckers 33 in dem Schlitz 7 eines Längsholms 5 bzw. 6 möglich. In der dargestellten Ausführungsform ist jedoch die Befestigung des EIB-Mehrfachsteckers 33 an einer der drei zur Verfügung stehenden Seiten des Mehrfachsteckers 21 bzw. 31 bevorzugt.

Bei den beschriebenen Systemen von Einklink-Mechanismen handelt sich um eine von mehreren Ausführungsformen eines solchen. So könnten die Laschen 49 des EIB-Mehrfachsteckers 33 auch leicht nach innen versetzt angeordnet werden. Die Ausnehmungen 44 im Mehrfachstecker 21 bzw. 31 wären korrespondierend ausgestaltet.

Der Mehrfachkupplungseinsatz 48 des EIB-Mehrfachsteckers 33 ist vorzugsweise wie der Mehrfachkupplungseinsatz 39 des Mehrfachsteckers 21 bzw. 31 mit einer Einspeisung 50 und drei Abgriffen 51 versehen. Um auch hier das Konzept der Kompaktheit beizubehalten, sind die Stecker entsprechend dem Mehrfachkupplungseinsatz 39 angeordnet. Des Weiteren gelten die zu dem Mehrfachkupplungseinsatz 39 gemachten Aussagen sinngemäss.

In Figur 7 ist ein Schnitt durch eine Kabelschale 53 zur Aufnahme von Kabeln 22, 32, 35 und 37 gezeigt. Die Kabelschale 53 ist z. B. relativ flach ausgebildet, das heisst, sie hat eine Breite, die grösser ist als ihre Höhe. Vorzugsweise hat sie im Querschnitt betrachtet ein abgerundetes Profil. Beispielsweise der Bügel 3 oder der Teil des Konstruktionselementes, an welchem das oder die Kabel indirekt gehalten werden sollen, wird mit Nockenschrauben 54 versehen. Die Anzahl dieser Nockenschrauben 54 pro Teil des Konstruktionselementes ist von der Länge des genannten Teils bzw. der Kabelschale abhängig. Die Kabelschale 53 ist mit einem Einklink-Mechanismus versehen, der beispielsweise zwei im Bereich der Mittelachse der Kabelschalen 53 angeordnete Zungen 55 aufweist. Diese Zungen 55 können auf die gesamte Länge der Kabelschale 53 geführt sein oder nur örtlich, korrespondierend mit der Position der Nockenschrauben 54 angeordnet sein. Durch Druck auf der Aussenseite der Kabelschale 53, vorzugsweise in der Nähe der Nockenschrauben 54 in Richtung des Bügels 3 wird die Kabelschale 53 eingeklinkt. Infolge der einfachen Befestigungskonstruktion lässt sich die Kabelschale 53 bei Bedarf wieder von Hand entfernen, indem an dieser gezogen wird. Der pilzförmige Kopf der Nockenschrauben 54 gibt den zangenförmigen Zungen 55 einen einrastenden Halt.

Nachdem die Kabel 22, 32, 35 und 37 in die Kabelschale 53 gelegt worden sind, wird diese an dem Bügel 3 eingeklinkt. Die Ränder 56 der Kabelschale 53 sind vorzugsweise im eingekiinkten Zustand nicht bis zum Bügel 3 geführt. Die verbleibende Lücke (Spalt) weist eine solche Grösse auf, dass allfällige zusätzliche Kabel in der Kabelschale 53 nachträglich seitlich eingeschoben werden können, ohne dass die Kabelschale 53 dafür entfernt werden muss. Es ist auch denkbar, dass nur einseitig ein solcher Spalt geschaffen wird. Bevorzugt werden die Ränder 56 aus Gründen der Dauerhaftigkeit und Ästhetik verdickt ausgebildet. Neben der Befestigung der Kabelschale 53 an dem Bügel 3 ist auch eine Befestigung an jedem anderen Teil des Konstruktionselementes denkbar, beispielsweise auch am Bügel 4. Ferner sind auch andere Befestigungen denkbar (Schraubverbindungen, Hakenverbindungen etc.). Anstelle von geraden und steifen Kabelschalen können natürlich auch gebogene Kabelführungen oder flexible Kabelschläuche bzw. Kabelketten (Gliederketten) angebracht werden.

Zusammenfassend ist festzustellen, dass durch die Erfindung die Flexibilität und die Modularität von elektrifizierten Möbelsystemen massgeblich gesteigert werden kann. Gleichzeitig ist eine Elektrifizierung geschaffen worden, welche ästhetischen, sicherheitstechnischen und modularen Anforderungen genügt. Dies einerseits auf hohem benutzerfreundlichem Niveau und anderseits mit einfachen Mitteln, welche ohne Zuzug von Fachkräften verwendet werden können.

## Patentansprüche

1. Möbelsystem mit einer Elektrifizierung, wobei das Möbelsystem mehrere, zur Aufnahme von funktionellen Möbeleinheiten gebildete Konstruktionselemente aufweist, **dadurch gekennzeichnet, dass** die Elektrifizierung zumindest einen an einem vertikalen Teil des Konstruktionselements befestigbaren Mehrfachstecker (21 bzw. 31) und an einem Teil des Konstruktionselements getragene Kabel (22 bzw. 32) vorgegebener Länge als elektrische Verbindung zwischen Mehrfachsteckern (21 bzw. 31) von zwei benachbarten Konstruktionselementen aufweist.

2. Möbelsystem nach Anspruch 1, **dadurch gekennzeichnet, dass** die Elektrifizierung zusätzlich zumindest einen an einem Teil des Konstruktionselements befestigbaren Taster (25) bzw. Schalter oder Sensor aufweist.

3. Möbelsystem nach Anspruch 1 oder 2, **dadurch gekennzeichnet, dass** der Mehrfachstecker (21 bzw. 31) und der Taster (25) bzw. Schalter an einem Teil des Konstruktionselements verschiebbar befestigbar sind.

4. Möbelsystem nach einem der Ansprüche 1 bis 3, **dadurch gekennzeichnet, dass** das Konstruktionselement zumindest zwei vertikale Längsholme (5 bzw. 6) aufweist.

5. Möbelsystem nach einem der Ansprüche 1 bis 3, **dadurch gekennzeichnet, dass** das Konstruktionselement einen geschlossenen, vertikalen, rechteckigen Rahmen (1, 2 bzw. 19) bildet, welcher vorzugsweise durch zwei vertikale Längsholme (5 bzw. 6) und durch zwei diese horizontal verbindende Bügel (3 bzw. 4) gebildet ist.

6. Möbelsystem nach einem der Ansprüche 4 oder 5, **dadurch gekennzeichnet, dass** die Längsholme (5 und 6) an Seiten, welche parallel zu einer durch den rechteckigen Rahmen gebildeten Ebene ausgerichtet sind, Befestigungsmittel für den Mehrfachstecker (21 bzw. 31) und/oder den Taster (25) bzw. Schalter aufweisen.

7. Möbelsystem nach Anspruch 6, **dadurch gekennzeichnet, dass** die Befestigungsmittel in Längsrichtung verlaufende Schlitze (7) sind.

8. Möbelsystem nach einem der Ansprüche 5 bis 7, **dadurch gekennzeichnet, dass** die Kabel (22 bzw. 32) eine Länge haben, die einer Länge eines Bügels zuzüglich einem Fünftel bis einer ganzen Länge eines Längsholmes (5 bzw. 6) entspricht.

9. Möbelsystem nach einem der Ansprüche 1 bis 8, **dadurch gekennzeichnet, dass** eine zusätzliche Halterung (33) für Steuerungselemente vorgesehen ist, welche auf dem Mehrfachstecker (21 bzw. 31) lösbar befestigbar ist.

10. Möbelsystem nach Anspruch 9, **dadurch gekennzeichnet, dass** die Steuerungselemente für eine Verkabelung auf Basis von EIB, DALI oder LAN vorgesehen sind.

11. Mehrfachstecker für die Elektrifizierung eines Möbelsystems nach Anspruch 1, **dadurch gekennzeichnet, dass** er ein Gehäuse (38) und einen auswechselbaren Mehrfachkupplungseinsatz (39) aufweist.

12. Gehäuse für einen Mehrfachstecker nach Anspruch 11, **dadurch gekennzeichnet, dass** das Gehäuse (38) an zumindest einer Aussenseite einen Einklink-Mechanismus (40) zur Befestigung an einem Teil des Konstruktionselementes aufweist.

13. Gehäuse nach Anspruch 12, **dadurch gekennzeichnet, dass** das Gehäuse (38) innenseitig zumindest einen Einklink-Mechanismus zur Befestigung des Mehrfachkupplungseinsatzes (39) in dem Gehäuse (38) aufweist.

14. Gehäuse nach einem der Ansprüche 12 bis 13, **dadurch gekennzeichnet, dass** das Gehäuse (38) an zumindest einer Seite zumindest eine Ausnehmung zur Befestigung eines weiteren Mehrfachsteckers (21, 31 bzw. 33) aufweist.

15. Gehäuse nach einem der Ansprüche 12 bis 14, **dadurch gekennzeichnet, dass** das Gehäuse (38) eine rohrartige Form, insbesondere die eines Prismas, ohne bodenseitigen und deckelseitigen Abschluss aufweist.

16. Mehrfachkupplungseinsatz für einen Mehrfachstecker nach Anspruch 11, **dadurch gekennzeichnet, dass** der Mehrfachkupplungseinsatz (39) zumindest eine Einspeisung (45) und zumindest zwei Abgriffe (46) aufweist.

17. Mehrfachkupplungseinsatz nach Anspruch 16, **dadurch gekennzeichnet, dass** der Mehrfachkupplungseinsatz (39) einen Einklink-Mechanismus zur Befestigung in dem Gehäuse (38) aufweist.

## Claims

1. Furniture system having an electrification system, the furniture system having a plurality of construction elements which are constructed to receive functional furniture units, **characterised in that** the electrification system has at least one multiple plug (21 or 31) which can be fixed to a vertical part of the construction element, and cables (22 or 32) of a given length which are carried on part of the construction element acting as an electrical connection between multiple plugs (21 or 31) of two adjacent construction elements.

2. Furniture system according to claim 1, **characterised in that** the electrification system further has at least one push-button (25) or switch or sensor which can be fixed to part of the construction element.

3. Furniture system according to claim 1 or 2, **characterised in that** the multiple plug (21 or 31) and the push-button (25) or switch can be displaceably fixed to part of the construction element.

4. Furniture system according to any one of claims 1 to 3, **characterised in that** the construction element has at least two vertical longitudinal struts (5 or 6).

5. Furniture system according to any one of claims 1 to 3, **characterised in that** the construction element forms a closed, vertical, rectangular frame (1, 2 or 19) which is preferably formed by two vertical longitudinal struts (5 or 6) and by two webs (3 or 4) which connect them horizontally.

6. Furniture system according to either claim 4 or claim 5, **characterised in that** the longitudinal struts (5 and 6) have, at sides which are aligned parallel with a plane which is defined by the rectangular frame, fixing means for the multiple plug (21 or 31) and/or the push-button (25) or switch.

7. Furniture system according to claim 6, **characterised in that** the fixing means are slots (7) which extend in a longitudinal direction.

8. Furniture system according to any one of claims 5 to 7, **characterised in that** the cables (22 or 32) are of a length which corresponds to one length of a web plus from one-fifth of to one entire length of a longitudinal strut (5 or 6).

9. Furniture system according to any one of claims 1 to 8, **characterised in that** an additional holder (33) is provided for control elements, which holder (33) can be releasably fixed on the multiple plug (21 or 31).

10. Furniture system according to claim 9, **characterised in that** the control elements are provided for cabling on the basis of EIB, DALI or LAN.

11. Multiple plug for the electrification system of a furniture system according to claim 1, **characterised in that** the multiple plug has a housing (38) and an exchangeable multiple coupling insert (39).

12. Housing for a multiple plug according to claim 11, **characterised in that** the housing (38) has, at at least one outer side, a latch mechanism (40) for fixing to part of the construction element.

13. Housing according to claim 12, **characterised in that** the housing (38) has internally at least one latch mechanism for fixing the multiple coupling insert (39) in the housing (38).

14. Housing according to either claim 12 or claim 13, **characterised in that** the housing (38) has, at at least one side, at least one recess for fixing a further multiple plug (21, 31 or 33).

15. Housing according to any one of claims 12 to 14, **characterised in that** the housing (38) has a tube-like shape, in particular the shape of a prism, without any closure at the bottom and top.

16. Multiple coupling insert for a multiple plug according to claim 11, **characterised in that** the multiple coupling insert (39) has at least one supply (45) and at least two taps (46).

17. Multiple coupling insert according to claim 16, **characterised in that** the multiple coupling insert (39) has a latch mechanism for fixing in the housing (38).

## Revendications

1. Système de meubles avec électrification, le système de meuble présentant une pluralité d'éléments de construction conformés pour recevoir des unités de meubles fonctionnelles, **caractérisé en ce que** l'électrification présente au moins une prise multiple (21, 31) pouvant être fixée sur une partie verticale de l'élément de construction, et des câbles (22, 32) portés sur une partie de l'élément de construction, les câbles ayant une longueur prédéterminée, faisant office de liaison électrique entre les prises multiples (21, 31) de deux éléments de construction voisins.

2. Système de meubles selon la revendication 1, **caractérisé en ce que** l'électrification présente en plus au moins un bouton-poussoir (25) ou un interrupteur ou un capteur pouvant être fixé sur une partie de l'élément de construction.

3. Système de meubles selon la revendication 1 ou 2, **caractérisé en ce que** la prise multiple (21, 31) et le bouton-poussoir (25) ou l'interrupteur sont susceptibles d'être fixés de façon mobile sur une partie de l'élément de construction.

4. Système de meubles selon l'une des revendications 1 à 3, **caractérisé en ce que** l'élément de construction présente au moins deux longerons (5, 6) verticaux.

5. Système de meubles selon l'une des revendications 1 à 3, **caractérisé en ce que** l'élément de construction forme un cadre (1, 2, 19) rectangulaire, vertical fermé, qui est formé de préférence par deux longerons (5, 6) verticaux et par deux étriers (3, 4) les reliant horizontalement.

6. Système de meubles selon l'une des revendications 4 ou 5, **caractérisé en ce que** les longerons (5, 6) présentent, sur des côtés orientés parallèlement à un plan formé par le cadre rectangulaire, des moyens de fixation pour la prise multiple (21, 31) et/ou le bouton-poussoir (25) ou l'interrupteur.

7. Système de meubles selon la revendication 6, **caractérisé en ce que** les moyens de fixation sont des fentes (7) s'étendant dans la direction longitudinale.

8. Système de meubles selon l'une des revendications 5 à 7, **caractérisé en ce que** les câbles (22, 32) ont une longueur qui correspond à la longueur d'un étrier, plus un cinquième, jusqu'à la longueur totale d'un longeron (5, 6).

9. Système de meubles selon l'une des revendications 1 à 8, **caractérisé en ce qu'**une fixation (33) supplémentaire pour des éléments de commande est prévue, fixation dans laquelle les prises multiples (21, 31) peuvent être fixées de façon désolidarisable.

10. Système de meubles selon la revendication 9, **caractérisé en ce que** les éléments de commande sont prévus pour un câblage à base EIB, DALI ou LAN.

11. Prise multiple pour l'électrification d'un système de meubles selon la revendication 1, **caractérisée en ce qu'**elle présente un boîtier (38) et un insert d'accouplement multiple (39) remplaçable.

12. Boîtier pour une prise multiple selon la revendication 11, **caractérisé en ce que** le boîtier (38) présente sur au moins une face extérieure un mécanisme d'encliquetage (40) pour assurer la fixation à une partie de l'élément de construction.

13. Boîtier selon la revendication 12, **caractérisé en ce que** le boîtier (38) présente côté intérieur au moins un mécanisme d'encliquetage pour la fixation de l'insert d'accouplement multiple (39) dans le boîtier (38).

14. Boîtier selon l'une des revendications 12 à 13, **caractérisé en ce que** le boîtier (38) présente sur au moins un côté au moins un évidement pour la fixation d'une autre prise multiple (21, 31, 33).

15. Boîtier selon l'une des revendications 12 à 14, **caractérisé en ce que** le boîtier (38) présente une forme tubulaire, en particulier celle d'un prisme, sans fermeture côté fond ou côté couvercle.

16. Insert d'accouplement multiple pour une prise multiple selon la revendication 11, **caractérisé en ce que** l'insert d'accouplement multiple (39) présente au moins une alimentation (45) et au moins deux prises de prélèvement (46).

17. Insert d'accouplement multiple selon la revendication 16, **caractérisé en ce que** l'insert d'accouplement multiple (39) présente un mécanisme d'encliquetage pour la fixation dans le boîtier (38).
